# EUROPEAN PATENT SPECIFICATION

(11) **EP 4 639 034 B1**
(45) Date of publication and mention of the grant of the patent: **25.11.2026**
(21) Application number: 23843984.8
(22) Date of filing: 19.12.2023
(51) Int. Cl.: F23R 3/58, F23R 7/00

(54) **METHOD OF CONTROLLING DEFLAGRATION COMBUSTION PROCESS IN PISTONLESS COMBUSTOR**
VERFAHREN ZUR STEUERUNG DES DEFLAGRATIONSVERBRENNUNGSPROZESSES IN EINER KOLBENLOSEN BRENNKAMMER
PROCÉDÉ DE COMMANDE D'UN PROCESSUS DE COMBUSTION PAR DÉFLAGRATION DANS UNE CHAMBRE DE COMBUSTION SANS PISTON

(30) Priority: 20.12.2022 FI 20226128
(43) Date of publication of application: 29.10.2025
(73) Proprietor: Finno Exergy Oy, 00210 Helsinki (FI)
(72) Inventor: ERÄMAA, Timo, 00210 Helsinki (FI); CICCATERI, Fabio, 00210 Helsinki (FI)
(74) Representative: Wilenius, Jami Juhani
(86) International application number: PCT/FI2023/050714
(87) International publication number: WO 2024/134026

(56) References cited:
- WO-A1-2020/249862
- US-A1- 2005 138 933
- US-A1- 2017 138 257

## Description

### FIELD OF THE INVENTION

The present invention relates to controlling of a deflagration combustion process in a pistonless pressure gain combustor.

### BACKGROUND OF THE INVENTION

Gas turbine combustion systems conventionally operate on a steady and continuous manner. Compressor supplies a continuous flow of air to the combustor. Inside combustor, fuel is added to the airflow, and consequently ignited. As the combustion air needs to be driven through the combustor, there is a loss of total pressure of around 3-5% over the combustion chamber. The loss of pressure is shown as diminished pressure at the turbine entry, detracting from the turbine's ability to generate mechanical power, therefore taking away of the total thermal efficiency of the gas turbine.

Gas turbine companies make a lot of effort to improve efficiency, in order to cut fuel consumption and carbon dioxide (C02) emissions; The main method used to improve gas turbine efficiency is by increasing overall pressure ratio and enabling a higher turbine inlet temperature by targeted cooling, as well as by development of materials with higher resistance to high temperature environment, and furthermore, by optimizing the aerodynamic efficiencies of the compressor and turbine components.

New and ambitious medium to long range goals have been established to meet the demands of mitigating the emissions that indorse climate change. The incremental development of gas turbine efficiency improvement starts showing an asymptotic development of diminishing returns, and possibly indicates that alternative methods of power generation and efficiency improvement need to be sought. To increase the competitiveness of the gas turbines in general, it essential to find a technology that bypasses the design constraints that the conventional gas turbine process is subjected to, and makes it possible to generate a step change in the efficiency.

It is generally recognized that by replacing the conventional gas turbine's combustor with a combustor that is able to increase at the same time temperature and pressure of the working fluid, a step change in the efficiency is possible. This principle is known as constant volume, or pressure gain combustion. Known idealisations of such a process are the Humphrey cycle, as well as the Atkinson cycle. It is a known fact based on rigorous thermodynamic principles, that such a mode of heat introduction is superior to that of the Brayton or Joule type cycle used in the regular gas turbine. If both cycles start heat introduction from the same state, a firm base for efficiency improvement is provided by lessening the irreversible exergy loss indicated by the entropy generation integral by use of the pressure gain combustion system. As a result, more work potential is introduced to the turbine, manifested by the increased overall pressure ratio made available to the turbine.

Because of its well-known thermodynamic advantages, pressure gain combustion has been investigated for decades. Many accomplished companies and research institutions are pushing to find workable solutions. Lately, there have been multiple approaches attempting to harness the potential of pressure gain combustion, most of them trying to exploit detonation, but with no real breakthrough. Usually, the failure is due to insufficient pressure gain, or the machinery not enduring the destructive nature of detonation.

WO 2020/249862 discloses a method of controlling deflagration combustion in a pistonless combustor.

### BRIEF DESCRIPTION OF THE INVENTION

An object of the present invention is thus to provide a method which eliminates or alleviates the above disadvantages. The object of the invention is achieved by a method which is characterized by what is stated in the independent claim. The preferred embodiments of the invention are disclosed in the dependent claims.

The invention is based on the idea of timing air and fuel inputs to a combustor to initiate and maintain a flow pattern having two flow components. A direct injection of fuel close to an ignition moment results in fast deflagration combustion in a pistonless combustor.

An advantage of the method of the invention is that the flow pattern is maintained within the combustor and pressure can rise even in case of an open output. A significant pressure gain can be achieved with the combustion process by optimising velocity of heat release with the claimed method.

### BRIEF DESCRIPTION OF THE DRAWINGS

In the following the invention will be described in greater detail by means of preferred embodiments with reference to the attached drawings, in which
Figure 1 illustrates an embodiment of a pistonless combustor;
Figures 2A to 2F illustrate examples of combustion systems;
Figure 3 illustrates a top view of an embodiment of a first combustion chamber;
Figure 4 illustrates a bottom view of an embodiment of a first combustion chamber;
Figure 5 illustrates flow components inside an embodiment of a pistonless combustor; and
Figures 6 and 7 are examples of timing diagrams of a pistonless combustor.

### DETAILED DESCRIPTION OF THE INVENTION

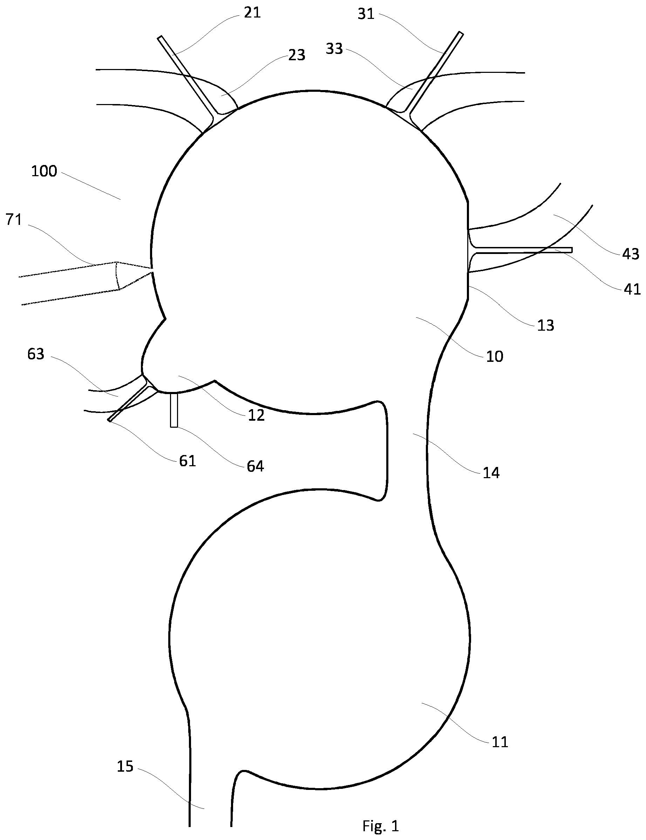

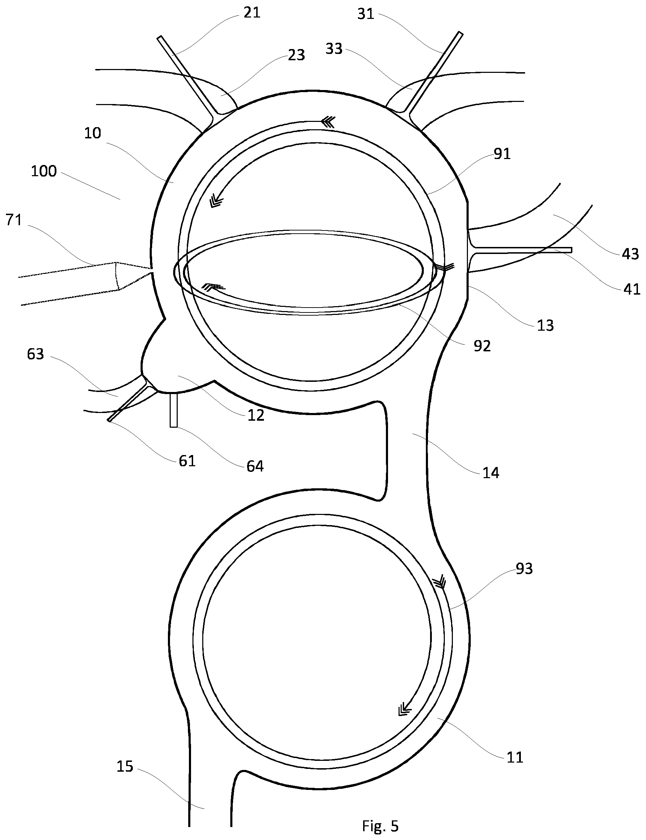

Referring to Figure 1 and Figures 3 to 5, a pistonless combustor 100 comprises a first combustion chamber 10, a second combustion chamber 11 and preferably a pre-combustion chamber 12. Preferably the pre-combustion chamber 12 forms a cavity or a protrusion on the periphery or wall of the first combustion chamber 10. Preferably the volume of the pre-combustion chamber 12 is at most 10 % of the volume of the first combustion chamber 10. In an embodiment the pre-combustion chamber has a semi-open configuration in which there is a line of sight to each point in an inner wall of the pre-combustion chamber 12 from an opening connecting the pre-combustion chamber to the first combustion chamber. The pre-combustion chamber preferably comprises an ignition device 64 for igniting a fuel-air mixture within the pre-combustion chamber. The ignition device can be for example a spark plug, or a microwave, plasma or laser ignition system. In an embodiment, the pre-combustion chamber 12 can be a pre-chamber or a torch ignition device known from prior art internal combustion piston engines.

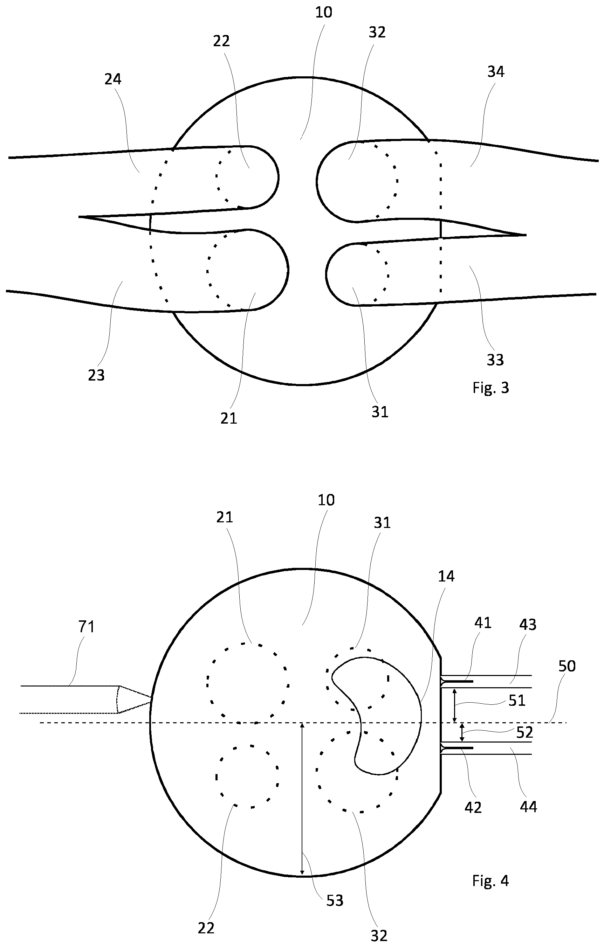

The first combustion chamber can have a shaped wall section 13 for aligning one or more input valves, such as a first input valve 21, a second input valve 31 or a fifth input valve 41. In Figure 1 the shaped wall section 13 is used for aligning the fifth input valve 41. A passage 14 connects the first combustion chamber 10 to the second combustion chamber. Fluids, such as air, exhaust gas and fuel can flow freely through the passage 14 between the first combustion chamber and the second combustion chamber. The flow of fluids through the passage is preferably not controlled by any valves. The exhaust gas and any other remaining fluids exit the pistonless combustor through output channel 15 which is preferably in connection with the second combustion chamber 11. In an embodiment, the pistonless combustor 100 comprises only one combustion chamber, i.e. the first combustion chamber 10, and the passage 14 is replaced with the output channel 15. Sizing, shaping and positioning of the passage 14 and the output channel 15 are also important means for controlling flows within the pistonless combustor. For example, in the embodiment shown in Figure 4, the passage 14 is positioned asymmetrically to the inlets and input valves, and the passage has a kidney-shaped cross-section. In general, an asymmetric positioning of the passage 14 compared to the input valves 21, 22, 31,32, 41, 42 has been found preferable.

In case where the output channel 15 is in connection with the second combustion chamber 11, the output channel 15 is preferably located opposite to the passage 14 such that flow from the passage 14 is directed away from the output channel 15. Such direction of flow hinders the flow from the passage 14 to the output channel 15 thereby creating a third flow component 93 within the second combustion chamber and allows for any remaining fuel to be combusted in the second combustion chamber 11. Aligning the output channel 15 to a direction opposite to the direction of the third flow component 93 further hinders the flow leaving the second combustion chamber 11 through the output channel 11 but at the same time it reduces efficiency of scavenging. Preferably, the second combustion chamber 11 does not have any fuel inputs and the purpose of the second combustion chamber is only to combust any remaining fuel in an air-rich environment. The second combustion chamber enables an increased burn rate, an improved pressure gain capability and it can be used to reduce NOx emissions.

The first combustion chamber 10 preferably has a spherical inner wall having minor deviations such as input valves 21, 31, 41, 61, the pre-combustion chamber 12, the shaped wall section 13 and the passage 14. In an embodiment, the first combustion chamber 10 has a toroidal inner wall having minor deviations such as input valves 21, 31, 41, 61, the pre-combustion chamber 12, the shaped wall section 13 and the passage 14. In an embodiment, the first combustion chamber 10 has a cylindrical inner wall having minor deviations such as input valves 21, 31, 41, 61, the pre-combustion chamber 12, the shaped wall section 13 and the passage 14. The second combustion chamber 11 preferably has a spherical inner wall having minor deviations such as the passage 14 and the output channel 15. In an embodiment, the second combustion chamber 11 has a toroidal inner wall having minor deviations such as the passage 14 and the output channel 15. In an embodiment, the second combustion chamber 11 has a cylindrical inner wall having minor deviations such as the passage 14 and the output channel 15.

A number of inlets 23, 33, 43 lead to the first combustion chamber and the inlets are controlled with valves 21, 31, 43. A first inlet 23 controlled by a first input valve 21 can be used for scavenging the first combustion chamber 10 and the second combustion chamber 11. An input flow of air can be provided through the first inlet 23 which flows through the first combustion chamber and the second combustion chamber thereby scavenging the pistonless combustor 100. The scavenging fills the combustion chambers with air while forcing exhaust gas to output channel 15. Positioning and aligning of the first inlet 23 and the first input valve 21 are designed to facilitate scavenging of the pistonless combustor. The first combustion chamber can comprise also a third inlet 24 controlled by a third input valve 22 for the same function. The positioning and alignment of the third inlet and the third input valve is similar to the first inlet and the first input valve, and in addition they are positioned and aligned symmetrically or asymmetrically compared to each other. Asymmetric positioning and alignment both increase possibilities to adjust the flows within the first combustion chamber.

A second inlet 33 controlled by a second input valve 31 can be used for input of air, fuel or air-fuel mixture to the first combustion chamber 10. The second inlet 33 and the second input valve 31 are positioned and aligned to produce a first flow component 91 into the first combustion chamber 10. Preferably the second inlet 33 and the second input valve 31 are positioned and aligned to produce an eccentric flow, i.e. a flow directed a certain distance off from a center off the first combustion chamber. Preferably the second inlet 33 and the second input valve 31 are also positioned and aligned to produce an eccentric flow a certain distance off from the passage 14, or a certain distance off from the output channel 15 in case of a pistonless combustor having a single combustion chamber. The first combustion chamber can comprise also a fourth inlet 34 controlled by a fourth input valve 32 for the same function. The positioning and alignment of the fourth inlet and the fourth input valve can be similar to the second inlet and the second input valve but the size of the valve is different - or vice versa. This can create a second flow component 92 in the first combustion chamber. Preferably, in addition they are positioned and aligned symmetrically or asymmetrically compared to each other. Asymmetric positioning and alignment both increase possibilities to adjust the flows within the first combustion chamber. In an embodiment where the number of inlets and input valves is minimized, the second inlet and input valves, or both the second and fourth inlets and input valves can also provide the air for scavenging, and in that case the first and third inlets and input valves can be omitted.

A fifth inlet 43 controlled by a fifth input valve 41 can be used for input of air, fuel or air-fuel mixture to the first combustion chamber 10. The input is provided in a form of a high-speed jet. The jet has an initial velocity of at least 0,1 Mach, preferably at least 0,2 Mach. The fifth inlet 43 and the fifth input valve 41 are positioned and aligned to either produce or strengthen a second flow component 92 into the first combustion chamber 10, or to increase turbulence in the first combustion chamber. The second flow component is not parallel to the first flow component 91. Preferably the fifth inlet 43 and the fifth input valve 41 are positioned and aligned to produce an eccentric flow, i.e. a flow directed a certain distance off from a center off the first combustion chamber. Preferably the fifth inlet 43 and the fifth input valve 41 are also positioned and aligned to produce an eccentric flow a certain distance off from the passage 14, or a certain distance off from the output channel 15 in case of a pistonless combustor having a single combustion chamber. Preferably, the fifth inlet 43 and the fifth input valve 41 are positioned on the shaped wall section 13 of the first combustion chamber 10. The shaped wall section can be for example a planar wall section or a wall section having a different curvature than the majority of the first combustion chamber. The first combustion chamber can comprise also a sixth inlet 44 controlled by a sixth input valve 42 for the same function. The positioning and alignment of the sixth inlet and the sixth input valve is similar to the fifth inlet and the fifth input valve, and in addition they are positioned and aligned symmetrically or asymmetrically compared to each other. Asymmetric positioning and alignment both increase possibilities to adjust the flows within the first combustion chamber. Preferably both the fifth input valve 41 and the sixth input valve 43 are positioned on the shaped wall section 13 and a distance 51 of the fifth inlet 42 from a center line 50 of the first combustion chamber is different than a distance 52 of the sixth inlet 44 from the center line 50 of the first combustion chamber. The fifth and sixth inlet channel can be air channels and the fifth and sixth input valves can be air valves.

The first combustion chamber 10 can further comprise one or more injectors 71 for direct injection of fuel. The fuel is injected into the combustion chamber with high pressure. The injector is preferably directed away from the passage 14 in order to prevent the injected fuel from escaping the first combustor 10 before combustion. In an embodiment, the placement and orientation of the injector are configured to increase turbulence of the flow within the first combustion chamber.

In general, alignment, positioning, sizing and shaping of the inlet channels, input valves and the injector, as well as other openings and channels, offer a wide set of parameters to control flows inside the pistonless combustor. For example, using a set of two different-sized valves instead of a single valve for the same input gives the freedom to adjust flow rate between the two valves and that functionality can be used for creating a desired flow pattern inside the pistonless combustor. Specific details vary depending on the size, shape and desired output of the combustor and also depending on the fuel used and desired operating frequency of the combustor. The fuel in all embodiments of the present disclosure means either liquid fuel or gaseous fuel. A person skilled in the art, provided with these design options and pursued objectives, is able to design a pistonless combustor according to the claims of the present disclosure.

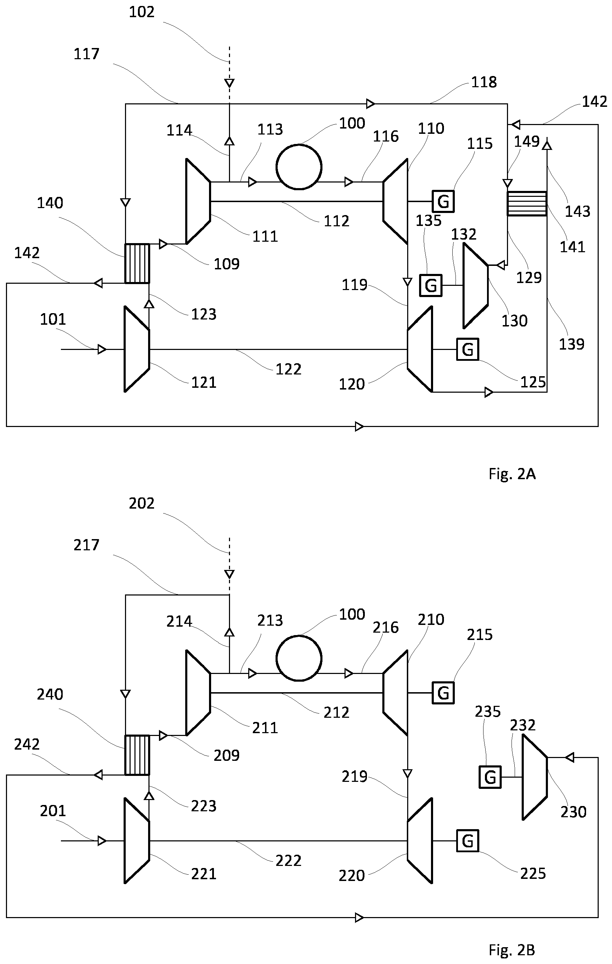

Figures 2A to 2F disclose four different examples of systems where the pistonless combustor 100 is used to generate electric energy.

Referring to Figure 2A, an air input 101 is provided for a low-pressure compressor 121. The low-pressure compressor has a common shaft 122 with a low-pressure turbine 120 and a low-pressure generator 125. The output 123 from the low-pressure compressor flows to a first heat exchanger 140 which cools the compressed air. The cooled compressed air is an input 109 for a high-pressure compressor 111. The high-pressure compressor has a common shaft 112 with a high-pressure turbine 110 and a high-pressure generator 115. An output from the high-pressure compressor 111 is divided into an input 113 to the pistonless combustor 100 and into a high-pressure bypass flow 114. Any embodiment of the pistonless combustor 100 presented in the present disclosure can be used. The pistonless combustor uses the high-pressure air input and fuel input to produce an output 116 which is directed to the high-pressure turbine 110 which rotates the shaft 112 which in turn rotates the high-pressure generator 115 to generate electric energy.

The output 119 from the high-pressure turbine is directed to the low-pressure turbine 120 which rotates the shaft 122 which in turn rotates the low-pressure generator 125 to generate electric energy. An output 139 from the low-pressure generator is directed to a second heat exchanger 141 which removes heat from the output flow 139 and the cooled output flow 143 is released from the system through exhaust. In an embodiment a flow from an external heat source can be arranged to the second heat exchanger, the first heat exchanger or both of them either in parallel or in series.

The high-pressure bypass flow 114 from the high-pressure compressor 111 is divided into an input 117 to the first heat exchanger 140 and a flow 118 to the second heat exchanger 141. The division can either be controlled, e.g. with one or more valves, or uncontrolled, i.e. based on pressure differences. The input 117 to the first heat exchanger is heated in the first heat exchanger 140 using the heat extracted from the output 123 from the low-pressure compressor 121. The heated output 142 from the first heat exchanger 140 is combined to the flow 118 to the second heat exchanger 141, thereby creating an input 149 to the second heat exchanger 141. The second heat exchanger heats the input 149 using the heat extracted from the output 139 of the low-pressure turbine 120. The heated output 129 of the second heat exchanger 141 is directed to an auxiliary turbine 130 rotating an auxiliary generator 135 with a shaft 132.

Optionally, an input 102 from an external source can be combined to the high-pressure bypass flow 114. The input 102 can be direct to the first heat exchanger, the second heat exchanger, or both together with the high-pressure bypass flow 114. The external source is preferably an output of a wastegate of a turbocharger of an external combustion engine, but also other high temperature, high pressure sources can be utilized.

Referring to Figure 2B, an air input 201 is provided for a low-pressure compressor 221. The low-pressure compressor has a common shaft 222 with a low-pressure turbine 220 and a low-pressure generator 225. The output 223 from the low-pressure compressor flows to a first heat exchanger 240 which cools the compressed air. The cooled compressed air is an input 209 for a high-pressure compressor 211. The high-pressure compressor has a common shaft 212 with a high-pressure turbine 210 and a high-pressure generator 215. An output from the high-pressure compressor 211 is divided into an input 213 to the pistonless combustor 100 and into a high-pressure bypass flow 214. Any embodiment of the pistonless combustor 100 presented in the present disclosure can be used. The pistonless combustor uses the high-pressure air input and fuel input to produce an output 216 which is directed to the high-pressure turbine 210 which rotates the shaft 212 which in turn rotates the high-pressure generator 215 to generate electric energy.

The output 219 from the high-pressure turbine is directed to the low-pressure turbine 220 which rotates the shaft 222 which in turn rotates the low-pressure generator 225 to generate electric energy. An output from the low-pressure generator is released from the system through exhaust.

The high-pressure bypass flow 214 from the high-pressure compressor 211 is directed into an input 217 to the first heat exchanger 240. Optionally, an input 202 from an external source can be combined to the high-pressure bypass flow 214. The external source is preferably an output of a wastegate of a turbocharger of an external combustion engine, but also other high temperature, high pressure sources can be utilized. The high-pressure bypass flow 214 optionally combined with the input 202 is the input 217 to the first heat exchanger which is heated in the first heat exchanger 240 using the heat extracted from the output 223 from the low-pressure compressor 221. The heated output 242 from the first heat exchanger 240 is directed to an auxiliary turbine 230 rotating an auxiliary generator 235 with a shaft 232.

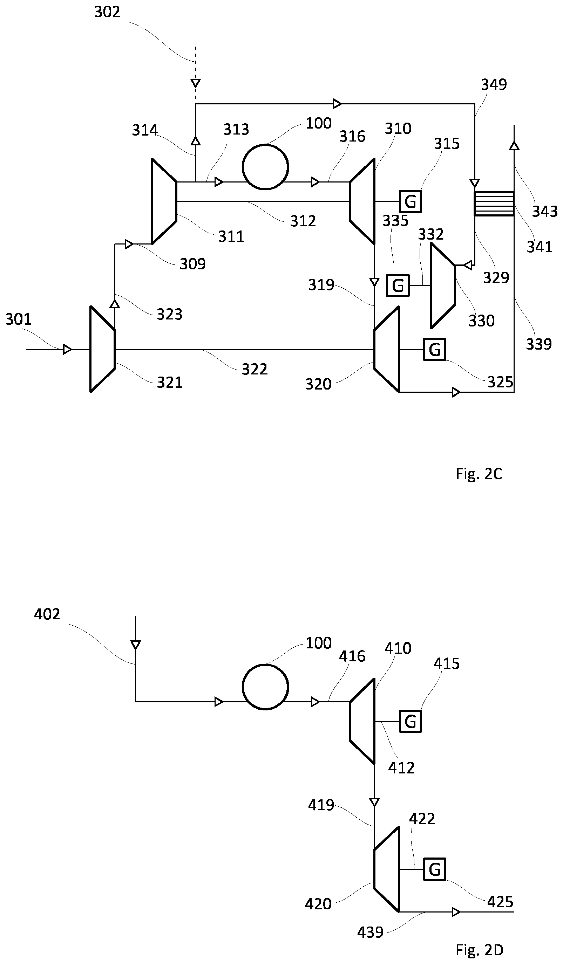

Referring to Figure 2C, an air input 301 is provided for a low-pressure compressor 321. The low-pressure compressor has a common shaft 322 with a low-pressure turbine 320 and a low-pressure generator 325. The output from the low-pressure compressor is an input 309 for a high-pressure compressor 311. The high-pressure compressor has a common shaft 312 with a high-pressure turbine 310 and a high-pressure generator 315. An output from the high-pressure compressor 311 is divided into an input 313 to the pistonless combustor 100 and into a high-pressure bypass flow 314. Any embodiment of the pistonless combustor 100 presented in the present disclosure can be used. The pistonless combustor uses the high-pressure air input and fuel input to produce an output 316 which is directed to the high-pressure turbine 310 which rotates the shaft 312 which in turn rotates the high-pressure generator 315 to generate electric energy.

The output 319 from the high-pressure turbine is directed to the low-pressure turbine 320 which rotates the shaft 322 which in turn rotates the low-pressure generator 325 to generate electric energy. An output 339 from the low-pressure generator is directed to a second heat exchanger 341 which removes heat from the output flow 339 and the cooled output flow 343 is released from the system through exhaust. In an embodiment a flow from an external heat source can be arranged to the second heat exchanger.

The high-pressure bypass flow 314 from the high-pressure compressor 311 is directed to the second heat exchanger 341. Optionally, an input 302 from an external source can be combined to the high-pressure bypass flow 314. The external source is preferably an output of a wastegate of a turbocharger of an external combustion engine, but also other high temperature, high pressure sources can be utilized. The high-pressure bypass flow 314 optionally combined with the input 302 is the input 349 to the second heat exchanger 341. The second heat exchanger heats the input 349 using the heat extracted from the output 339 of the low-pressure turbine 320. The heated output 329 of the second heat exchanger 341 is directed to an auxiliary turbine 330 rotating an auxiliary generator 335 with a shaft 332.

Referring to Figure 2D, a high-pressure input 402 of air from an external source, such as a turbocharger of an external combustion engine is an input to the pistonless combustor 100. Any embodiment of the pistonless combustor 100 presented in the present disclosure can be used. The pistonless combustor uses the high-pressure input 402 and fuel input to produce an output 416 which is directed to the high-pressure turbine 410 which rotates a shaft 412 which in turn rotates a high-pressure generator 415 to generate electric energy.

The output 419 from the high-pressure turbine is directed to a low-pressure turbine 420 which rotates a shaft 422 which in turn rotates a low-pressure generator 425 to generate electric energy. An output 439 from the low-pressure generator is released from the system through exhaust.

In the systems of Figures 2A to 2D each of the first heat exchanger and the second heat exchanger can be a single heat exchanger or two or more heat exchanger connected in series or in parallel. Similarly, the input from a wastegate 102, 202, 302, 402 of an external turbo charger could also be an input directly from an external turbocharger.

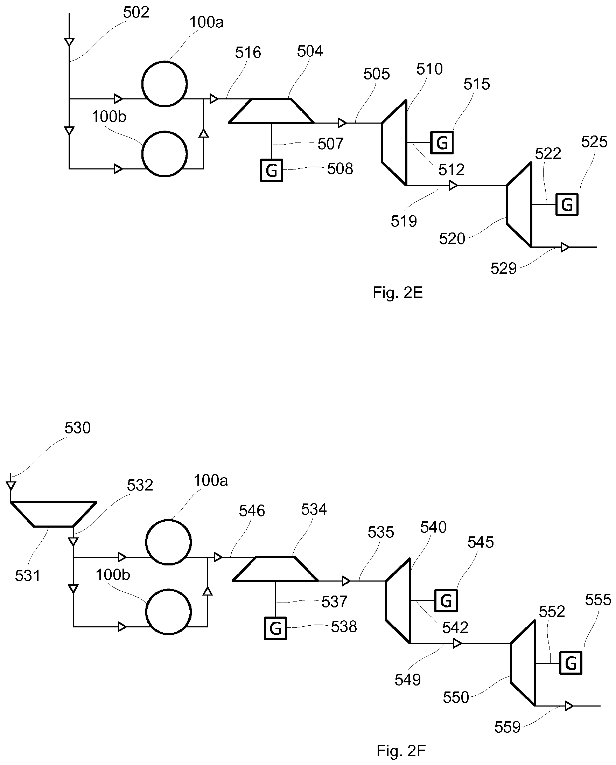

Now referring to Figure 2E an input 502 of air is an input to two pistonless combustors 100a and 100b. Any embodiment of the pistonless combustor 100 presented in the present disclosure can be used. The pistonless combustors operate in alternate cycles having 50% phase difference or about 40%-60% phase difference to provide steadier output flow than a single combustor. The combustors use the air input 502 and fuel input to produce an output 516 which is directed to an input of a turbine 504, such as a turbocharger, preferably a radial turbocharger. The turbine 504 produces higher and steadier air output 505 than the combustors 100a; 100b alone. Optionally, the turbine 504 can also rotate a shaft 507 which rotates a generator, preferably a high-speed generator 508 to generate electric energy.

The output 505 from the turbine 504 is directed to a high-pressure turbine 510 which rotates a shaft 512 which in turn rotates a high-pressure generator 515 to generate electric energy. The output 519 from the high-pressure turbine is directed to a low-pressure turbine 520 which rotates a shaft 522 which in turn rotates a low-pressure generator 525 to generate electric energy. An output 529 from the low-pressure generator is released from the system through exhaust. The high-pressure turbine 510 and the low-pressure turbine 520 are preferably axial turbines.

In an embodiment, each of the combustors 100a; 100b have a fluid connection bypassing the turbine 504, thereby creating a direct fluid connection between combustors and either the high-pressure turbine 510 or the low-pressure turbine 520. The fluid connections are controlled with valves and can be opened during flushing of the combustors to facilitate the flushing.

Referring to Figure 2F, a compressor 531 has an input 530 of air. The compressor 531 produces an output 532 of compressed air which is an input to two pistonless combustors 100a and 100b. Any embodiment of the pistonless combustor 100 presented in the present disclosure can be used. The pistonless combustors operate in alternate cycles having 50% phase difference or about 40%-60% phase difference to provide steadier output flow than a single combustor. The combustors use the output 532 from the compressor and fuel input to produce an output 546 which is directed to an input of a turbine 534, such as a turbocharger, preferably a radial turbocharger. The turbine 534 produces higher and steadier air output 535 than the combustors 100a; 100b alone. Optionally, the turbine 534 can also rotate a shaft 537 which rotates a generator, preferably a high-speed generator 538 to generate electric energy.

The output 535 from the turbine 534 is directed to a high-pressure turbine 540 which rotates a shaft 542 which in turn rotates a high-pressure generator 545 to generate electric energy. The output 549 from the high-pressure turbine is directed to a low-pressure turbine 550 which rotates a shaft 552 which in turn rotates a low-pressure generator 555 to generate electric energy. An output 559 from the low-pressure generator is released from the system through exhaust. The high-pressure turbine 540 and the low-pressure turbine 550 are preferably axial turbines.

In an embodiment, each of the combustors 100a; 100b have a fluid connection bypassing the turbine 534, thereby creating a direct fluid connection between combustors and either the high-pressure turbine 540 or the low-pressure turbine 550. The fluid connections are controlled with valves and can be opened during flushing of the combustors to facilitate the flushing.

An aspect of the disclosure is a pistonless combustor 100 (also referred as "the combustor") comprising at least one input channel 33, 34, 43, 44, 63 for air and fuel, an output channel 15, and a first combustion chamber 10. In an embodiment of the disclosure the combustor is a deflagration combustor where detonation combustion is avoided. Said at least one input channel 33, 34, 43, 44, 63 is controlled with a valve 31, 32, 41, 42, 61. In an embodiment of the disclosure the output channel 15 is constantly open to the first combustion chamber 10. In addition, one or more of the at least one input channel 33, 34, 43, 44, 63 has an eccentric alignment configured to produce an eccentric input flow of air creating a self-preserving flow pattern 91, 92 of a fuel-air mixture within the first combustion chamber 10. In an embodiment fuel is mixed with air within one or more of the at least one input channel to produce a fuel-air mixture.

Preferably two or more of the at least one input channel 33, 34, 43, 44, 63 has an eccentric alignment configured to produce an eccentric input flow of air creating a self-preserving flow pattern of a fuel-air mixture within the first combustion chamber 10. In an embodiment the self-preserving flow pattern preferably comprises combined swirl flow and tumble flow. In an embodiment the swirl flow is initiated by one input channel and the tumble flow is initiated by another input channel.

In an embodiment of the disclosure the eccentric input flow has a ratio e/r of at least 0,1 and at most 0,3, where e is a distance 51, 52 between a centre of the first combustion chamber and a line of alignment of the one or more of the at least one input channel, and where r is a distance 53 between the centre of the combustion chamber and an inner surface of an exterior wall of the first combustion chamber.

In an embodiment of the disclosure the geometry of the first combustion 10 chamber facilitates maintaining of the combined swirl flow and tumble flow by means of the first combustion chamber having an internal shape that is at least substantially one of the following: toroidal, spherical and cylindrical.

In an embodiment of the disclosure the pistonless combustor further comprises an air channel controlled by an air valve and having an eccentric alignment, the air channel being configured to supply air or fuel-air mixture into the combustion chamber for maintaining the combined swirl flow and tumble flow within the first combustion chamber.

In an embodiment of the disclosure the combustor comprises a pre-combustion chamber 12 having smaller volume than the first combustion chamber. The pre-combustion chamber 12 forms a cavity or a protrusion on the periphery of the first combustion chamber 10. Preferably the volume of the pre-combustion chamber is at most 10 % of the volume of the first combustion chamber. In an embodiment the pre-combustion chamber has a semi-open configuration in which there is a line of sight to each point in an inner wall of the pre-combustion chamber from an opening connecting the pre-combustion chamber to the first combustion chamber.

In an embodiment the passage 14 connects the first combustion chamber 10 to a second combustion chamber 11 and the output channel 15 is in connection with the second combustion chamber. Preferably the passage 14 is configured to be constantly open between the first combustion chamber and the second combustion chamber. The combustor is configured to produce a flow pattern which enables use of an open passage but of course a valve-controlled passage can also be used. In an embodiment the second combustion chamber 11 has a volume larger than the first combustion chamber but smaller than three times the volume of the first combustion chamber 10. In an embodiment the second combustion chamber 11 has a volume smaller than the first combustion chamber but larger than 25% of the volume of the first combustion chamber 10. In an embodiment the second combustion chamber 11 has a volume larger than a quarter of the first combustion chamber but smaller than three times the volume of the first combustion chamber 10.

In an embodiment the output channel 15 connects the first combustion chamber to a pressure wave charger. Preferably the output channel is configured to be constantly open between the first combustion chamber and the pressure wave charger, i.e. the pressure wave charger replaces the second combustion chamber 11 presented in some embodiments of the present disclosure. The pistonless combustor is configured to produce a flow pattern which enables use of an open output channel 15 but of course a valve-controlled output channel can also be used.

In an embodiment of the disclosure the pistonless combustor comprises at least one input channel 23, 24 for air only, at least one input channel 33, 34, 43, 44 for air which may include fuel, at least one input channel 33, 34, 43, 44, 63 for fuel which may include air, and at least one injector for injecting fuel, i.e. a fuel injector 71. The pistonless combustor 100 preferably comprises also at least one air input channel 43, 44 configured to input air jets having initial air velocity at least Mach 0,2.

As an example, a combustion system comprises a single pistonless combustor 100 and a source of compressed air, such as a compressor 111, and a turbine 110 configured to received combustion products from the combustor and generate electric energy by rotating a generator 115.

As another example, a combustion system comprises one or more pistonless combustors and a source of compressed air, such as a compressor, and a turbine configured to received combustion products from the combustor and generate electric energy by rotating a generator. A portion of air from compressor output is led to the combustor to cool down the combustor. The portion of air can be led against outer surface of the combustor, preferably in a cooling channel formed against the outer surface of the combustor. The outer surface can be provided with cooling ribs to facilitate cooling of the combustor. As the portion of air flows against the outer surface of the combustor and/or between the cooling ribs, heat from the combustor is transferred to the portion of air thereby increasing temperature and volume of the portion of air. Said portion of air is heated by the combustor and the system is configured to direct the flow of heated air to the turbine. A check valve is preferably used to prevent flow of fluids from the turbine to the cooling channel. The portion of air that cools down the combustor and enters the turbine is still in much lower temperature than the output of the combustor. Thus, the portion of air also decreases temperature of the turbine and thereby allows for higher temperature output from the combustor.

In an embodiment the combustion system is configured to direct the flow from the turbine to a heat exchanger. Said heat exchanger transfers heat from an external heat source and/or the heat released from the heated air flow coming from the turbine into a flow or air coming from the compressor. This flow heated by the heat exchanger is directed to the turbine or to the auxiliary turbine configured to operate the compressor or the generator or the auxiliary generator. Water or steam, or both water and steam, can be introduced to said heated flow from the compressor in a controlled manner using one or more valves. Said one or more valves can be e.g. rotating valves or electrically controlled valves. In an embodiment, the flow of heated air to the turbine or to the auxiliary turbine can be configured to flow through narrow passages.

The pistonless combustor in general can also in a method where timing of air and fuel inputs to a combustor is used for initiating and maintaining a flow pattern having two flow components to achieve fast deflagration combustion in a pistonless combustor. The embodiments of the pistonless combustor 100 of the present disclosure can also be used in the method.

An advantage of the method is that the flow pattern 91, 92, 93 is maintained within the combustor and pressure can rise even in case of an open output. A significant pressure gain can be achieved with the combustion process by optimising velocity of heat release with the method.

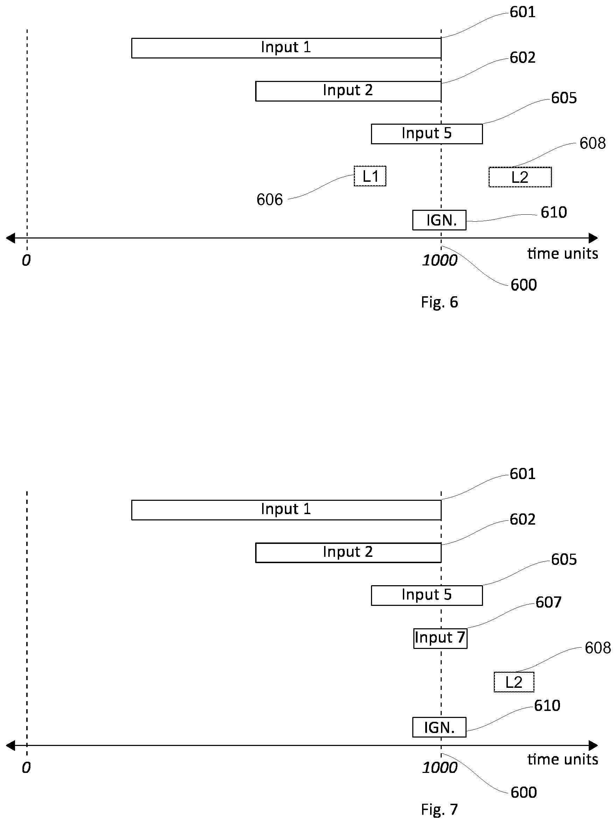

Now referring to Figure 6, an example of a timing diagram is disclosed. The diagram shows a time slot for each input valve and each input valve is opened and closed in each cycle within the respective time slot. One working cycle of the pistonless combustor is divided to time units from 0 to 1000 and Figure 6 shows a single cycle starting from 0 units and ending to 1000 time units, the latter marking a reference point 600.

In Figure 6, a time slot 601 for the first input valve starts from 750 units before the reference point and ends at the reference point. The first input valve 21 can be used for e.g. input of air for scavenging the pistonless combustor. A time slot 602 for the second input valve starts from 450 time units before the reference point and ends at the reference point. The second input valve 31 can be used for e.g. input of fuel and air. Figure 6 does not show a time slot for the third input valve 22 but in an embodiment, the third input valve 22 is also used for scavenging the pistonless combustor with air like the first input valve 21 and a similar time slot could be used for the third input valve as is used for the first input valve. Figure 6 does not show a time slot for the fourth input valve 32 but in an embodiment, the fourth input valve 32 is also used for input of fuel and air like the second input valve 31 and a similar time slot could be used for the fourth input valve 32 as is used for the second input valve 31.

A time slot 605 for the fifth input valve 41 starts from 170 time units before the reference point and ends 100 time units after the reference points. The fifth input valve 41 can be used for e.g. input of fuel and air.

A first time slot 606 for fuel injection through injector 71 is before ignition time slot 610 and the time slot 606 starts 150 time units before the reference point and ends 50 time units before the reference point. The injection of fuel in time slot 606 is configured to optimize speed of combustion, typically the aim is to maximize the speed of combustion. Another or alternative purpose of the injection before ignition is to ensure that deflagration combustion takes place and detonation combustion is prevented.

A second time slot 608 for fuel injection through injector 71 is after the ignition time slot 610 and the time slot 608 starts 40 time units after the reference point and ends 150 time units after the reference point. In an embodiment, the second time slot 608 overlaps the ignition time slot 610 and starts 40 time units before the reference point and ends 150 time units after the reference point. The injection of fuel in time slot 610 is configured to increase the total energy released in a cycle. That means either increased pressure or a longer period of a given output pressure. The amount of fuel that is injected is restricted by the amount of oxygen available in the combustor. The injection in the time slot 608 preferably takes place during a rising pressure level in the first combustion chamber, thereby extending both the peak pressure and duration of a pressure peak.

In an embodiment, the total amount of fuel is controlled in relation to the amount of air introduced into the first combustion chamber (10). Said total amount of fuel exceeds by at least 5 % but not more than 15 % the amount of fuel combustible with the amount of air introduced into the first combustion chamber (10). Said total amount of fuel can also be controlled in relation to the the total amount of air in the first combustion chamber (10) and the second combustion chamber (20) such that the total amount of fuel is combustible with the total amount of air.

It should be noted that depending on the fuel(s), desired pressure levels, running speed, inputs of air and fuel, and several other factors, either the first time slot 606 or the second time slot 608 for fuel injection can be omitted. Example of this is described in connection with Figure 7.

Finally, a time slot 610 for ignition is shown and it starts from 70 time units before the reference point and ends at 60 time units after the reference point 600. The ignition takes place within the time slot 610.

Now referring to Figure 7 where another example of a timing diagram is disclosed. The diagram shows a time slot for each input valve and each input valve is opened and closed in each cycle within the respective time slot. One working cycle of the pistonless combustor is divided to time units from 0 to 1000 and Figure 7 shows a single cycle starting from 0 units and ending to 1000 time units, the latter marking a reference point 600.

In Figure 7, a time slot 601 for the first input valve starts from 750 units before the reference point and ends at the reference point. The first input valve 21 can be used for e.g. input of air for scavenging the pistonless combustor. A time slot 602 for the second input valve 31 starts from 450 time units before the reference point and ends at the reference point. The second input valve 31 can be used for e.g. input of fuel and air. Figure 7 does not show a time slot for the third input valve 22 but in an embodiment, the third input valve is also used for scavenging the pistonless combustor with air like the first input valve and a similar time slot could be used for the third input valve as is used for the first input valve. Figure 7 does not show a time slot for the fourth input valve 32 but in an embodiment, the fourth input valve 32 is also used for input of fuel and air like the second input valve 31 and a similar time slot could be used for the fourth input valve 32 as is used for the second input valve 31.

A time slot 605 for the fifth input valve 41 starts from 170 time units before the reference point and ends 100 time units after the reference points. The fifth input valve 41 can be used for e.g. input of fuel and air. A time slot 607 for the seventh input valve 61 starts from 160 time units before the reference point and end 65 time units after the reference. The seventh input valve 61 can be used for e.g. input of fuel and air to e.g. an ignition area such as the pre-combustion chamber 12. Finally, a time slot 610 for ignition is shown and it starts from 70 time units before the reference point and ends at 60 time units after the reference point 600. The ignition takes place within the time slot 610. In an embodiment, all introduction of fuel into the pistonless combustor 100 is suspended between 10 time units before the ignition of the fuel-air mixture and 10 time units after the ignition of the fuel-air mixture. This can be achieved by closing each valve through which fuel is being introduced prior to 10 time units before the ignition event. The suspension also prevents opening of valves for introducing fuel during the period of 10 time units before and after ignition.

In the embodiment of Figure 7, only the second time slot 608 for fuel injection through injector 71 is used. The second time slot 608 is after the ignition time slot 610 and starts 40 time units after the reference point and ends 150 time units after the reference point. In an embodiment, the second time slot 608 overlaps the ignition time slot 610 and starts 40 time units before the reference point and ends 150 time units after the reference point. The injection of fuel in time slot 610 is configured to increase the total energy released in a cycle. That means either increased pressure or a longer period of a given output pressure. The amount of fuel that is injected is restricted by the amount of oxygen available in the combustor. The injection in the time slot 608 preferably takes place during a rising pressure level in the first combustion chamber, thereby extending both the peak pressure and duration of a pressure peak. In an embodiment, all introduction of fuel into the pistonless combustor 100 is suspended between 10 time units before the ignition of the fuel-air mixture and 10 time units after the ignition of the fuel-air mixture. This can be achieved by closing each valve through which fuel is being introduced prior to 10 time units before the ignition event. The suspension also prevents opening of valves for introducing fuel during the period of 10 time units before and after ignition.

The same definitions and purposes of the input valves described in connection with Figures 1 to 5 can be applied to the timing diagrams of Figures 6 and 7. The timings disclosed in the present application can be used in the pistonless combustor described in connection with Figures 1 to 5.

The invention is a method of controlling a deflagration combustion process in a pistonless combustor. The combustion process consists of repeating working cycles divided to equally long time units, e.g. from 0 to 1000. The division to time units is artificial and any number of time units can be used to divide a single cycle.

The method comprises a step of opening a first input valve 21 and introducing air into the first combustion chamber 10 of the pistonless combustor 100. A purpose of this air input is to scavenge combustion products of a previous cycle from the pistonless combustor. The first input valve is preferably opened at earliest 750 time units before a reference point 600 and preferably closed at latest at the reference point 600. In an embodiment, the first input valve can be a single valve 21 or a set of valves 21, 23, such as a combination of two or more valves. The size, shape and other physical properties may or may not vary between the set of valves. Timing between the valves of the set of valves can be adjusted individually.

Depending on the number of valves, physical properties of the valve and most of all properties of the pistonless combustor, the first input valve 21 can be opened at earliest 600, 680 or 800 time units before the reference point 600.

The reference point 600 is a closing event of a second input valve 31. The reference point could be any other defined point in a cycle. The reference point is merely an anchor to which timings of all events are tied to.

The method further comprises a step of opening a second input valve 31 after opening the first input valve 21 and introducing air into the combustor. The input of air via the second input valve thereby preferably initiates a flow pattern having a first flow component 91 within the first combustion chamber 10. The second input valve is preferably opened at earliest 450 time units before a reference point and closed at the reference point. As said, the closing event of the second input valve defines the reference point. In an embodiment, the second input valve can be a single valve 31 or a set of valves 31, 33, such as a combination of two or more valves. The size, shape and other physical properties may or may not vary between the set of valves. Timing between the valves of the set of valves can be adjusted individually.

Depending on the number of valves, physical properties of the valve and most of all properties of the pistonless combustor, the second input valve 31 can be opened at earliest 300, 350 or 400 time units before the reference point.

The method also comprises a step opening a fifth input valve 41 after opening the second input valve 31 and introducing air into the combustor. The air input of the fifth input valve is in a nonparallel angle in relation to the input through the second input valve thereby creating a second flow component to the flow pattern within the combustor for increasing speed of combustion propagation. The fifth input valve is preferably opened at earliest 170 time units before a reference point and the fifth input valve is preferably closed at latest 100 time units after the reference point. In an embodiment, the fifth input valve 41 can be a single valve or a set of valves, such as a combination of two or more valves, such as the fifth input valve 41 and the sixth input valve 42. The size, shape and other physical properties may or may not vary between the set of valves. Timing between the valves of the set of valves can be adjusted individually.

Depending on the number of valves, physical properties of the valve and most of all properties of the combustor, the fifth input valve can be opened at earliest 150, 160 or 200 time units before the reference point.

The method further comprises a step of introducing fuel from any input valve opening after the opening of the first input valve 21, wherein the fuel is mixed into the air creating a fuel-air mixture flowing within the flow pattern. Preferably an input of fuel-air mixture through either the second input valve 31, the fourth input valve 33, the fifth input valve 41, the sixth input valve 43, the seventh input valve 61, or any combination of them or even all of them, is used instead of pure air input.

The method still comprises a step of igniting the fuel-air mixture within the pistonless combustor thereby increasing pressure within the pistonless combustor. The ignition is performed preferably at earliest 40 units before the reference point and preferably at latest 60 units after the reference point.

The method also comprises a step of injecting fuel directly into the first combustion chamber 10 through the injector 71. The direct injection of fuel can take place before the ignition, during the ignition or after the ignition, preferably in a range of at earliest 40 time units before the reference point and at most 150 time units after the reference point, or more preferably in a range of at least 40 time units after the reference point and at most 150 time units after the reference point.

In an embodiment of the invention the method further comprises a step of opening a seventh input valve 61 and introducing fuel-air mixture into an ignition area. Ignition area is a space within the combustor in which said ignition step takes place and an additional fuel-air mixture input facilitates ignition of the whole content of the combustor. Preferably the ignition area is a pre-combustion chamber 12 as disclosed in the present disclosure. The seventh input valve 61 is preferably opened at earliest 160 time units before the reference point and closed preferably at latest 65 units after the reference point. In an embodiment, the seventh input valve can be a single valve or a set of valves, such as a combination of two or more valves. The size, shape and other physical properties may or may not vary between the set of valves. Timing between the valves of the set of valves can be adjusted individually.

Depending on the number of valves, physical properties of the valve and most of all properties of the combustor, the seventh input valve can be opened at earliest 150, 160 or 200 time units before the reference point.

In an embodiment of the invention the second input valve 31, the fifth input valve 41 or both of them have an eccentric alignment producing an eccentric input flow of air for initiating and maintaining the flow pattern of the fuel-air mixture within the combustor. The eccentric alignment means that the input is directed off-center, i.e. directed to miss the center point of the combustor. The eccentric alignment together with shaping of the combustor can create the flow pattern 91, 92 within the combustor.

In an embodiment of the invention the first flow component 91 is a swirl flow and the second flow component 92 is a tumble flow. In an embodiment the first flow component is a tumble flow and the second flow component is a swirl flow. In an embodiment the first flow component and the second flow component are two vortices non-parallel between each other.

In an embodiment of the invention geometry of the combustor facilitates maintaining of the combined swirl flow and tumble flow. This is achieved by means of the combustor having an internal shape that is at least substantially one of the following: toroidal, spherical and cylindrical.

In an embodiment of the invention the pistonless combustor has an output channel 15 that is constantly open. The flow pattern within the combustor enables use of the constantly open output channel 15. Of course, an output channel controlled with an output valve can also be used but it is not essential and it leads to a more complicated solution.

A set of examples of timing of valves based on prototype testing or simulation is disclosed in Tables 1 to 3.

It will be obvious to a person skilled in the art that, as the technology advances, the inventive concept can be implemented in various ways. The invention and its embodiments are not limited to the examples described above but may vary within the scope of the claims.

**Table 1. Example 1, based on prototype.**

| Example 1 | Combustor volume 1 liter | |
|---|---|---|
| | Operating frequency 17 Hz | |
| | Liquid fuel, gasoline | |
| | Open | Close |
| Input 1 | 438 | 811 |
| Input 2 | 734 | 1000 |
| Input 5 | 842 | 942 |
| Input 7 | 892 | 942 |
| Spark | 974 | 974 |

**Table 2. Example 2, based on simulation.**

| Example 2 | Combustor volume 22 litres | |
|---|---|---|
| | Operating frequency 15 Hz | |
| | Liquid fuel, kerosene | |
| | Open | Close |
| Input 1 | 300 | 736 |
| Input 2 | 697 | 1000 |
| Input 5 | 902 | 1000 |
| Input 7 | 905 | 961 |
| Spark | 961 | 961 |

**Table 3. Example 3, based on simulation.**

| Example 3 | Combustor volume 500 litres | |
|---|---|---|
| | Operating frequency 5 Hz | |
| | Gaseous fuel, methane | |
| | Open | Close |
| Input 1 | 388 | 744 |
| Input 2 | 677 | 1000 |
| Input 5 | 859 | 957 |
| Input 7 | 905 | 961 |
| Spark | 975 | 975 |

### List of reference numbers:

- 10: first combustion chamber
- 11: second combustion chamber
- 12: pre-combustion chamber
- 13: shaped wall section
- 14: passage
- 15: output channel
- 21: first input valve / input valve 1
- 22: third input valve / input valve 3
- 23: first inlet
- 24: third inlet
- 31: second input valve / input valve 2
- 32: second inlet
- 33: fourth input valve / input valve 4
- 34: fourth inlet
- 41: fifth input valve / input valve 5
- 42: fifth inlet
- 43: sixth input valve / input valve 6
- 44: sixth inlet
- 50: center line
- 51: distance of fifth inlet
- 52: distance of sixth inlet
- 53: distance between inner wall and centre
- 61: seventh input valve / input valve 7
- 63: seventh inlet
- 64: ignition device
- 71: injector
- 91: first flow component
- 92: second flow component
- 93: third flow component
- 100: pistonless combustor
- 100a: pistonless combustor
- 100b: pistonless combustor
- 101: air input
- 102: input from wastegate
- 109: high pressure compressor input
- 110: high pressure turbine
- 111: high pressure compressor
- 112: shaft
- 113: input to pistonless combustor
- 114: high pressure bypass
- 115: high pressure generator
- 116: output from pistonless combustor
- 117: input to first heat exchanger
- 118: flow to second heat exchanger
- 119: output from high pressure turbine
- 120: low pressure turbine
- 121: low pressure compressor
- 122: shaft
- 123: output from low pressure compressor
- 125: low pressure generator
- 130: auxiliary turbine
- 132: shaft
- 135: auxiliary generator
- 139: output from low pressure turbine
- 140: first heat exchanger
- 141: second heat exchanger
- 142: output from first heat exchanger
- 143: output from second heat exchanger
- 149: input to second heat exchanger
- 201: air input
- 202: input from wastegate
- 209: high pressure compressor input
- 210: high pressure turbine
- 211: high pressure compressor
- 212: shaft
- 213: input to pistonless combustor
- 214: high pressure bypass
- 215: high pressure generator
- 216: output from pistonless combustor
- 217: input to first heat exchanger
- 219: output from high pressure turbine
- 220: low pressure turbine
- 221: low pressure compressor
- 222: shaft
- 223: output from low pressure compressor
- 225: low pressure generator
- 230: auxiliary turbine
- 232: shaft
- 235: auxiliary generator
- 240: first heat exchanger
- 242: output from first heat exchanger
- 301: air input
- 302: input from wastegate
- 309: high pressure compressor input
- 310: high pressure turbine
- 311: high pressure compressor
- 312: shaft
- 313: input to pistonless combustor
- 314: high pressure bypass
- 315: high pressure generator
- 316: output from pistonless combustor
- 319: output from high pressure turbine
- 320: low pressure turbine
- 321: low pressure compressor
- 322: shaft
- 325: low pressure generator
- 330: auxiliary turbine
- 332: shaft
- 335: auxiliary generator
- 339: output from low pressure turbine
- 341: second heat exchanger
- 343: output from second heat exchanger
- 349: input to second heat exchanger
- 402: input from wastegate
- 410: high pressure turbine
- 412: shaft
- 415: high pressure generator
- 416: output from pistonless combustor
- 419: output from high pressure turbine
- 420: low pressure turbine
- 422: shaft
- 425: low pressure generator
- 439: output from low pressure turbine
- 502: input of air
- 504: turbine / turbocharger
- 505: output from turbine / turbocharger
- 507: shaft
- 508: high-speed generator
- 510: high pressure turbine
- 512: shaft
- 515: high pressure generator
- 516: output from pistonless combustors
- 519: output from high pressure turbine
- 520: low pressure turbine
- 522: shaft
- 525: low pressure generator
- 529: output from low pressure turbine
- 530: input of air
- 531: compressor
- 532: output from compressor
- 534: turbine / turbocharger
- 535: output from turbine / turbocharger
- 537: shaft
- 538: high-speed generator
- 540: high pressure turbine
- 542: shaft
- 545: high pressure generator
- 546: output from pistonless combustors
- 549: output from high pressure turbine
- 550: low pressure turbine
- 552: shaft
- 555: low pressure generator
- 559: output from low pressure turbine
- 600: reference point for timing
- 601: time slot for first input valve
- 602: time slot for second input valve
- 605: time slot for fifth input valve
- 606: time slot for first fuel injection
- 607: time slot for seventh input valve
- 608: time slot for second fuel injection
- 610: time slot for ignition

## Claims

1. A method of controlling a deflagration combustion process in a pistonless combustor (100), the combustion process consisting of repeating working cycles divided to equally long time units from 0 to 1000, and the method comprising steps of:
opening a first input valve (21) and introducing air into the pistonless combustor thereby scavenging combustion products of the previous cycle;
opening a second input valve (31) after opening the first input valve (21) and introducing air into the combustor (100) thereby initiating a flow pattern having a first flow component (91) within the combustor, the second input valve (31) being opened at earliest 450 time units before a reference point (600) and closed at the reference point;
opening a fifth input valve (41) after opening the second input valve (31) and introducing air into the pistonless combustor in a nonparallel angle in relation to the input through the second input valve (31) thereby creating a second flow component (92) to the flow pattern within the pistonless combustor for increasing speed of combustion propagation, the fifth input valve (41) being opened at earliest 170 time units before the reference point and closed at latest 100 time units after the reference point;
introducing fuel from any input valve opening after the opening of the first input valve (21), wherein the fuel is mixed into the air creating a fuel-air mixture flowing within the flow pattern (91, 92);
igniting the fuel-air mixture within the pistonless combustor thereby increasing pressure within the pistonless combustor, where the ignition is performed at earliest 70 units before the reference point and at latest 60 units after the reference point,
wherein the reference point is a closing event of the second input valve (31), and
wherein the method is **characterized in that** it comprises a step of introducing fuel by direct injection through an injector (71) at earliest 40 time units before the reference point and at most 150 time units after the reference point, wherein an injection of the fuel into the combustion chamber is directed away from a passage (15) connecting the first combustion chamber (10) and the second combustion chamber (20).

2. The method of claim 1, wherein all introduction of fuel into the pistonless combustor (100) is suspended between 10 time units before the ignition of the fuel-air mixture and 10 time units after the ignition of the fuel-air mixture.

3. The method of claim 1 or 2, wherein the total amount of fuel is controlled in relation to the amount of air introduced into the first combustion chamber (10), said total amount of fuel exceeding by at least 5 % but not more than 15 % the amount of fuel combustible with the amount of air introduced into the first combustion chamber (10).

4. The method of any one of claims 1 to 3, wherein the method further comprises a step of introducing fuel by direct injection through an injector (71) at most 150 time units before the reference point and at least 50 time units before the reference point, wherein an injection of the fuel into the combustion chamber is directed away from a passage (15) connecting the first combustion chamber (10) and the second combustion chamber (20).

5. The method of any one of claims 1 to 4, wherein the method further comprises opening a seventh input valve (61) and introducing fuel-air mixture into an ignition area, the seventh input valve (61) being opened at earliest 160 time units before the reference point (600) and closed at latest 65 units after the reference point.

6. The method of any one of claims 1 to 5, wherein one or more of the following: the second input valve (31) and the fifth input valve (41), have an eccentric alignment producing an eccentric input flow of air for initiating and maintaining the flow pattern of the fuel-air mixture within the pistonless combustor.

7. The method of any one of claims 1 to 6, wherein the first flow component (91) is a swirl flow and the second flow component (92) is a tumble flow, or the first flow component (91) is a tumble flow and the second flow component (92) is a swirl flow.

8. The method of claim 7, wherein geometry of the pistonless combustor (100) facilitates maintaining of the combined swirl flow and tumble flow by means of the pistonless combustor having an internal shape that is at least substantially one of the following: toroidal, spherical and cylindrical.

9. The method of any one of claims 1 to 8, wherein the pistonless combustor has an output channel (15) that is constantly open.

10. The method of any one of claims 1 to 9, wherein the method comprises supplying of compressed air against an outer surface of the combustor (100) for transferring heat from the combustor (100) to said compressed air, and introducing the heated compressed air into a turbine (310, 330).

11. The method of any one of claims 1 to 10, where the fuel is introduced by direct injection through the injector (71) at least 40 time units after the reference point and at most 150 time units after the reference point, wherein the injection of the fuel into the combustion chamber is directed away from a passage (15) connecting the first combustion chamber (10) and the second combustion chamber (20).

## Patentansprüche

1. Ein Verfahren zum Steuern eines Deflagrations-Verbrennungsprozesses in einer kolbenlosen Brennkammer (100), wobei der Verbrennungsprozess aus sich wiederholenden Arbeitszyklen besteht, die in gleich lange Zeiteinheiten von 0 bis 1000 unterteilt sind, und wobei das Verfahren die folgenden Schritte umfasst:
Öffnen eines ersten Einlassventils (21) und Einleiten von Luft in die kolbenlose Brennkammer, wodurch Verbrennungsprodukte des vorhergehenden Zyklus ausgespült werden;
Öffnen eines zweiten Einlassventils (31) nach dem Öffnen des ersten Einlassventils (21) und Einleiten von Luft in die Brennkammer (100), wodurch ein Strömungsmuster eingeleitet wird, das eine erste Strömungskomponente (91) innerhalb der Brennkammer aufweist, wobei das zweite Einlassventil (31) frühestens 450 Zeiteinheiten vor einem Referenzpunkt (600) geöffnet und zum Referenzpunkt geschlossen wird;
Öffnen eines fünften Einlassventils (41) nach dem Öffnen des zweiten Einlassventils (31) und Einleiten von Luft in die kolbenlose Brennkammer in einem nicht parallelen Winkel relativ zum Einlass durch das zweite Einlassventil (31), wodurch eine zweite Strömungskomponente (92) zu dem Strömungsmuster innerhalb der kolbenlosen Brennkammer hinzugefügt wird, um die Ausbreitungsgeschwindigkeit der Verbrennung zu erhöhen, wobei das fünfte Einlassventil (41) frühestens 170 Zeiteinheiten vor dem Referenzpunkt geöffnet und spätestens 100 Zeiteinheiten nach dem Referenzpunkt geschlossen wird;
Einleiten von Kraftstoff durch eine beliebige Einlassventilöffnung nach dem Öffnen des ersten Einlassventils (21), wobei der Kraftstoff mit der Luft vermischt wird, wodurch ein Kraftstoff-Luft-Gemisch erzeugt wird, das innerhalb des Strömungsmusters (91, 92) strömt;
Zünden des Kraftstoff-Luft-Gemisches innerhalb der kolbenlosen Brennkammer, wodurch der Druck innerhalb der kolbenlosen Brennkammer erhöht wird, wobei die Zündung frühestens 70 Zeiteinheiten vor dem Referenzpunkt und spätestens 60 Zeiteinheiten nach dem Referenzpunkt erfolgt,
wobei der Referenzpunkt ein Schließereignis des zweiten Einlassventils (31) ist, und
wobei das Verfahren **dadurch gekennzeichnet ist, dass** es einen Schritt des Einleitens von Kraftstoff durch Direkteinspritzung mittels eines Einspritzers (71) frühestens 40 Zeiteinheiten vor dem Referenzpunkt und spätestens 150 Zeiteinheiten nach dem Referenzpunkt umfasst, wobei das Einspritzen des Kraftstoffs in die Brennkammer von einem Durchgang (15) weggerichtet ist, der die erste Brennkammer (10) und die zweite Brennkammer (20) verbindet.

2. Verfahren nach Anspruch 1, wobei jegliches Einleiten von Kraftstoff in die kolbenlose Brennkammer (100) zwischen 10 Zeiteinheiten vor der Zündung des Kraftstoff-Luft-Gemisches und 10 Zeiteinheiten nach der Zündung des Kraftstoff-Luft-Gemisches ausgesetzt wird.

3. Verfahren nach Anspruch 1 oder 2, wobei die Gesamtmenge an Kraftstoff in Bezug auf die in die erste Brennkammer (10) eingeleitete Luftmenge gesteuert wird, wobei die Gesamtmenge an Kraftstoff die Kraftstoffmenge, die mit der in die erste Brennkammer (10) eingeleiteten Luftmenge verbrannt werden kann, um mindestens 5 %, jedoch höchstens 15 % übersteigt.

4. Verfahren nach einem der Ansprüche 1 bis 3, wobei das Verfahren ferner einen Schritt des Einleitens von Kraftstoff durch Direkteinspritzung mittels eines Einspritzers (71) frühestens 150 Zeiteinheiten vor dem Referenzpunkt und spätestens 50 Zeiteinheiten vor dem Referenzpunkt umfasst, wobei das Einspritzen des Kraftstoffs in die Brennkammer von einem Durchgang (15) weggerichtet ist, der die erste Brennkammer (10) und die zweite Brennkammer (20) verbindet.

5. Verfahren nach einem der Ansprüche 1 bis 4, wobei das Verfahren ferner das Öffnen eines siebten Einlassventils (61) und das Einleiten eines Kraftstoff-Luft-Gemisches in einen Zündbereich umfasst, wobei das siebte Einlassventil (61) frühestens 160 Zeiteinheiten vor dem Referenzpunkt (600) geöffnet und spätestens 65 Zeiteinheiten nach dem Referenzpunkt geschlossen wird.

6. Verfahren nach einem der Ansprüche 1 bis 5, wobei eines oder mehrere der folgenden Ventile: das zweite Einlassventil (31) und das fünfte Einlassventil (41), eine exzentrische Ausrichtung aufweisen, die eine exzentrische Einlassströmung von Luft erzeugt, um das Strömungsmuster des Kraftstoff-Luft-Gemisches innerhalb der kolbenlosen Brennkammer einzuleiten und aufrechtzuerhalten.

7. Verfahren nach einem der Ansprüche 1 bis 6, wobei die erste Strömungskomponente (91) eine Drallströmung und die zweite Strömungskomponente (92) eine Walzenströmung ist oder die erste Strömungskomponente (91) eine Walzenströmung und die zweite Strömungskomponente (92) eine Drallströmung ist.

8. Verfahren nach Anspruch 7, wobei die Geometrie der kolbenlosen Brennkammer (100) das Aufrechterhalten der kombinierten Drallströmung und Walzenströmung dadurch erleichtert, dass die kolbenlose Brennkammer eine Innenform aufweist, die zumindest im Wesentlichen eine der folgenden Formen aufweist: toroidal, kugelförmig und zylindrisch.

9. Verfahren nach einem der Ansprüche 1 bis 8, wobei die kolbenlose Brennkammer einen Ausgangskanal (15) aufweist, der konstant offen ist.

10. Verfahren nach einem der Ansprüche 1 bis 9, wobei das Verfahren das Zuführen von Druckluft gegen eine Außenoberfläche der Brennkammer (100) zum Übertragen von Wärme von der Brennkammer (100) auf die Druckluft und das Einleiten der erwärmten Druckluft in eine Turbine (310, 330) umfasst.

11. Verfahren nach einem der Ansprüche 1 bis 10, wobei der Kraftstoff durch Direkteinspritzung mittels des Einspritzers (71) frühestens 40 Zeiteinheiten nach dem Referenzpunkt und spätestens 150 Zeiteinheiten nach dem Referenzpunkt eingeleitet wird, wobei das Einspritzen des Kraftstoffs in die Brennkammer von einem Durchgang (15) weggerichtet ist, der die erste Brennkammer (10) und die zweite Brennkammer (20) verbindet.

## Revendications

1. Procédé de commande d'un processus de combustion par déflagration dans une chambre de combustion sans piston (100), le processus de combustion consistant en une succession de cycles de travail divisés en unités de temps de durée égale comprises entre 0 et 1 000, et le procédé comprenant les étapes consistant à :
ouvrir une première soupape d'admission (21) et introduire de l'air dans la chambre de combustion sans piston, évacuant ainsi les produits de combustion du cycle précédent ;
ouvrir une deuxième soupape d'admission (31), après l'ouverture de la première soupape d'admission (21), et introduire de l'air dans la chambre de combustion (100), déclenchant ainsi un profil d'écoulement présentant une première composante d'écoulement (91) à l'intérieur de la chambre de combustion, la deuxième soupape d'admission (31) étant ouverte au plus tôt 450 unités de temps avant un point de référence (600) et fermée au niveau du point de référence ;
ouvrir une cinquième soupape d'admission (41), après l'ouverture de la deuxième soupape d'admission (31), et introduire de l'air dans la chambre de combustion sans piston selon un angle non parallèle par rapport à l'admission par la deuxième soupape d'admission (31), créant ainsi une seconde composante d'écoulement (92) dans le profil d'écoulement à l'intérieur de la chambre de combustion sans piston afin d'augmenter la vitesse de propagation de la combustion, la cinquième soupape d'admission (41) étant ouverte au plus tôt 170 unités de temps avant le point de référence et étant fermée au plus tard 100 unités de temps après le point de référence ;
introduire du carburant par n'importe quelle soupape d'admission s'ouvrant après l'ouverture de la première soupape d'admission (21), le carburant étant mélangé à l'air, ce qui crée un mélange carburant-air s'écoulant à l'intérieur du profil d'écoulement (91, 92) ;
allumer le mélange carburant-air à l'intérieur de la chambre de combustion sans piston, augmentant ainsi la pression à l'intérieur de la chambre de combustion sans piston, l'allumage étant effectué au plus tôt 70 unités de temps avant le point de référence et au plus tard 60 unités de temps après le point de référence,
dans lequel le point de référence étant un événement de fermeture de la deuxième soupape d'admission (31), et
dans lequel le procédé est **caractérisé en ce qu'**il comprend une étape consistant à introduire du carburant par injection directe à travers un injecteur (71) au plus tôt 40 unités de temps avant le point de référence et au plus tard 150 unités de temps après le point de référence, dans lequel l'injection du carburant dans la chambre de combustion est dirigée à l'opposé d'un passage (15) reliant la première chambre de combustion (10) et la deuxième chambre de combustion (20).

2. Procédé de la revendication 1, dans lequel toute introduction de carburant dans la chambre de combustion sans piston (100) est suspendue entre 10 unités de temps avant l'allumage du mélange carburant-air et 10 unités de temps après l'allumage du mélange carburant-air.

3. Procédé de la revendication 1 ou 2, dans lequel la quantité totale de carburant est régulée en fonction de la quantité d'air introduite dans la première chambre de combustion (10), ladite quantité totale de carburant dépassant d'au moins 5 %, mais de pas plus de 15 %, la quantité de carburant pouvant être brûlée avec la quantité d'air introduite dans la première chambre de combustion (10).

4. Procédé de l'une quelconque des revendications 1 à 3, dans lequel le procédé comprend en outre une étape consistant à introduire du carburant par injection directe à travers un injecteur (71) au plus 150 unités de temps avant le point de référence et au moins 50 unités de temps avant le point de référence, dans lequel l'injection du carburant dans la chambre de combustion étant dirigée à l'opposé d'un passage (15) reliant la première chambre de combustion (10) et la deuxième chambre de combustion (20).

5. Procédé de l'une quelconque des revendications 1 à 4, dans lequel le procédé comprend en outre l'ouverture d'une septième soupape d'admission (61) et l'introduction du mélange carburant-air dans une zone d'allumage, la septième soupape d'admission (61) étant ouverte au plus tôt 160 unités de temps avant le point de référence (600) et fermée au plus tard 65 unités de temps après le point de référence.

6. Procédé de l'une quelconque des revendications 1 à 5, dans lequel une ou plusieurs parmi la deuxième soupape d'admission (31) et la cinquième soupape d'admission (41) présentent un alignement excentrique produisant un écoulement d'air d'admission excentrique permettant d'initier et de maintenir le profil d'écoulement du mélange carburant-air à l'intérieur de la chambre de combustion sans piston.

7. Procédé de l'une quelconque des revendications 1 à 6, dans lequel la première composante d'écoulement (91) est un écoulement tourbillonnaire et la seconde composante d'écoulement (92) est un écoulement tourbillonnaire transversal, ou la première composante d'écoulement (91) est un écoulement tourbillonnaire transversal et la seconde composante d'écoulement (92) est un écoulement tourbillonnaire.

8. Procédé de la revendication 7, dans lequel la géométrie de la chambre de combustion sans piston (100) facilite le maintien de l'écoulement tourbillonnaire et de l'écoulement tourbillonnaire transversal combinés, grâce à la forme interne de la chambre de combustion sans piston, qui est au moins sensiblement l'une des formes suivantes : toroïdale, sphérique et cylindrique.

9. Procédé de l'une quelconque des revendications 1 à 8, dans lequel la chambre de combustion sans piston présente un canal de sortie (15) qui est constamment ouvert.

10. Procédé de l'une quelconque des revendications 1 à 9, dans lequel le procédé comprend l'injection d'air comprimé contre une surface extérieure de la chambre de combustion (100) pour transférer la chaleur de la chambre de combustion (100) vers ledit air comprimé, et l'introduction de l'air comprimé chauffé dans une turbine (310, 330).

11. Procédé de l'une quelconque des revendications 1 à 10, dans lequel le carburant est introduit par injection directe à travers l'injecteur (71) au moins 40 unités de temps après le point de référence et au plus 150 unités de temps après le point de référence, dans lequel l'injection du carburant dans la chambre de combustion est dirigée à l'opposé d'un passage (15) reliant la première chambre de combustion (10) et la deuxième chambre de combustion (20).
